# EUROPEAN PATENT APPLICATION

(11) **EP 1 074 373 A1**
(43) Date of publication of application: **07.02.2001**
(21) Application number: 00202758.9
(22) Date of filing: 03.08.2000
(51) Int. Cl.: B29C 45/38

(54) **Displaceable punch mechanism**

(30) Priority: 05.08.1999 NL 1012778
(71) Applicant: Axxicon Moulds Eindhoven B.V., 5602 BS Eindhoven (NL)
(72) Inventor: Voets, Martines Henricus Joseph, 5612 CR Einhoven (NL); Hout, Petrus Johannes Frederik Joseph, 5709 GE Helmond (NL)
(74) Representative: Jorritsma, Ruurd

(57) **Abstract**

Injection mould assembly provided with a punch mechanism (8) protruding into the cavity (4) delimited between the mould halves. This punch mechanism (8) serves to make an opening in the object to be moulded and also to secure the object after punching and prior to removal from the mould. It is proposed to vary that part of the object which is supported by the punch mechanism (8), i.e. the extent to which the punch mechanism (8) protrudes into the cavity (4), as a function of the operating conditions.

## Description

The present invention relates to an injection mould assembly comprising at least two mould parts, in which one of these mould parts is provided with a punch mechanism which is movable relative to said mould part from a first position extending partially into the cavity delimited between the mould parts and a second position fully penetrating through the plastics object which has been injected into the cavity. An injection mould assembly of this type is generally known in the prior art. In this description the term mould parts is understood as meaning the entire structure by which a cavity is delimited. That is to say, the term encompasses both any master mould with attached specific mould and the various components from which such parts are constructed.

An injection mould assembly of this type is used, for example, for the manufacture of disc-shaped information carriers. In this case an opening is made in the centre of the information carrier. This opening can be realized by injection moulding but it is generally preferred to produce this opening through the use of a punch mechanism. After the injection moulding, this punch mechanism is preferably moved into the cavity and the desired opening is thereby obtained. Once this opening has been obtained, the punch mechanism is not completely retracted from the cavity. Such a return motion takes place only over a limited distance during the opening of the mould parts. This prevents the object which has just been moulded, as the mould parts are opened, from being arbitrarily left on either of the mould parts or from coming loose from the mould parts and falling. The partial withdrawal of the punch mechanism ensures that the object which has just been moulded is located at that mould part to which the punch mechanism belongs and, moreover, that object is prevented from coming loose from that mould part. The object which has just been produced can subsequently be taken away between the opened mould parts by means of a robot arm.

In practice, such a construction has proven to work excellently and consequently is in general use.

However, it has been found that under certain operating conditions, such as the starting-up of an injection mould assembly, in which the temperature conditions differ from the "normal" operating conditions, the punch mechanism engages the newly punched opening more substantially than at the intended operating temperature. That is to say, upon the partial retraction of the punch mechanism the object which has just been moulded is especially well secured and it is especially difficult for the robot to remove the object from the punch mechanism. It is assumed that upon starting-up, as a result of the relatively low temperature of the punch mechanism, the object which has just been moulded shrinks firmly onto the punch mechanism. Increasing the force (vacuum) by which the object is removed from the punch mechanism can offer an initial solution. This has been shown however to cause unacceptable deformation of the object which has just been moulded, which can lead to lasting damage and rejection.

Another obvious approach would be the complete withdrawal of the punch mechanism. This has the above-stated drawbacks, however, that it is no longer certain on which side of the cavity the object is left and that there is a chance of the object falling.

A further solution which is known in the prior art is to fit a separately movable stripping sleeve around the punch mechanism. This makes the mould part especially complicated, however, which is detrimental to the cost and operating safety and also increases the size of the mould assembly.

The object of the present invention is to eliminate the above-stated drawbacks and to construct the mould assembly such that, even during start-up, no special supervision by an operator is necessary, and nor do any special measures, such as lubrication of the punch, need to be implemented during the start-up.

This object is achieved in an above-described injection-moulding assembly through the presence of means which can be switched off during operation, which means provide for a further movement of the punch mechanism into a third position in which this protrudes less far into the cavity than in the said first position.

With the aid of the invention, the punch mechanism can assume at least three positions. The first two positions are known in the prior art and are described above. However, if under certain conditions there is a risk that the punch mechanism and the moulded object might jam, it is proposed according to the invention that although the punch mechanism should not be fully retracted from the mould cavity, it should nevertheless be retracted further than in the prior art. That is to say, the punch mechanism still supports the moulded object, but the force with which contact is made between object and punch mechanism is reduced by the smaller contact area to the extent that it is easily possible for a robot to remove the moulded object from the particular mould part. On the other hand, it is ensured that the moulded object does not come loose from the punch mechanism.

As the injection-moulding process advances or as the operating conditions are changed, the punch mechanism can once again be retracted over the smaller distance after punching, i.e. the situation as is known in the prior art arises, in which the punch mechanism juts a considerable distance into the cavity.

The invention can be used with all types of injection sequences. The most basic process is to first close both mould halves and inject plastic material at a constant cavity volume. In a second mode the mould halves will not be completely closed at the starting of injection of plastic material. During or after injection of plastic material the moulds halves are further closed, compressing the plastic material. It is either possible to completely fill the cavity with plastic material before compression starts or to only partly fill the cavity. Other injection moulding sequences are known for the person skilled in the art and can, advantageously, use the method and device according to the invention. If there is an additional movement of the mould part from which the punch mechanism extends, its movement, i.e. its extension into the cavity, should be taken from that mould part. In other words, in said first position the free extremity of the punch is spaced with a first distance from a reference point on the associated mould part and in said third position spacing of this extremity is smaller than in the first position.

Following the above insight according to the invention, it will instantly be clear to the person skilled in the art that it is possible in a variety of ways to execute the withdrawal movement of the punch mechanism over a larger distance than is usual in the prior art.

According to an advantageous embodiment of the invention, the movement of the punch mechanism is controlled by means of a stop and this stop can be displaced by means of a fluid. That is to say, the application or removal of fluid pressure can be used to change the position of the stop and hence the length of travel of the punch mechanism.

More especially, the mould part in which the punch mechanism is fitted is provided with a displaceable cap, and the displacement of that cap can be switched off. Within this cap, the punch mechanism is fitted in a displaceable manner. Through the displacement of the cap, the displacement travel of the punch mechanism can be increased or reduced.

The aim at present is to be able with an injection mould assembly to mould objects of different thickness. This relates especially to the moulding of information carriers. A known audio-visual information carrier is twice as thick as a so-called DVD disc part. Indeed, two injection-moulded DVD disc parts are attached to each other after the moulding so as thus to form a visual information carrier of the same thickness as the known audio information carrier. This means that every effort is made to make injection mould assemblies as universal as possible and that it is possible to mould objects of different thickness. To realise this object, spacer means are present which determine the position of the cap relative to the said mould part. The punch stroke and position of the punch mechanism are thereby influenced. It will be understood that further measures should be taken to determine the position of the two mould parts relative to each other in the injection position, i.e. the size of the cavity, but these are of no importance to the distance to be covered by the punch mechanism.

Further improvement of the detachment of the moulded object from the punch mechanism can be obtained if the free, punching end is tapered.

The invention also relates to a method for the injection moulding of an object, comprising the injection of a plastics material into a cavity delimited by at least two mould halves, the introduction of a punch mechanism into this cavity in order to make an opening in the injected object, the at least partial withdrawal of that punch mechanism from this cavity while securing that object and the removal of that object after the opening of the aforementioned mould halves, in which method that punch mechanism, under certain operating conditions, is selectively withdrawn further to a position in which the object is still secured by that punch mechanism.

As indicated above, the operating conditions in question are especially the start-up of the injection-moulding operation. It should be understood, however, that other operating conditions also can provoke the further withdrawal of the punch mechanism.

The invention is explained in greater detail below with reference to an illustrative embodiment portrayed in the drawing, in which:
Fig. 1 shows a diagrammatic side view, in cross section, of a part of a mould assembly with the punch mechanism in the injection-moulding position;
Fig. 2 shows the injection mould assembly according to Fig. 1 with the punch mechanism in the punching position;
Fig. 3 shows the injection mould assembly according to Fig. 1 in the position according to the invention;
Fig. 4 shows in detail the position according to Fig. 1;
Fig. 5 shows in detail the position according to Fig. 2; and
Fig. 6 shows in detail the position according to Fig. 3.

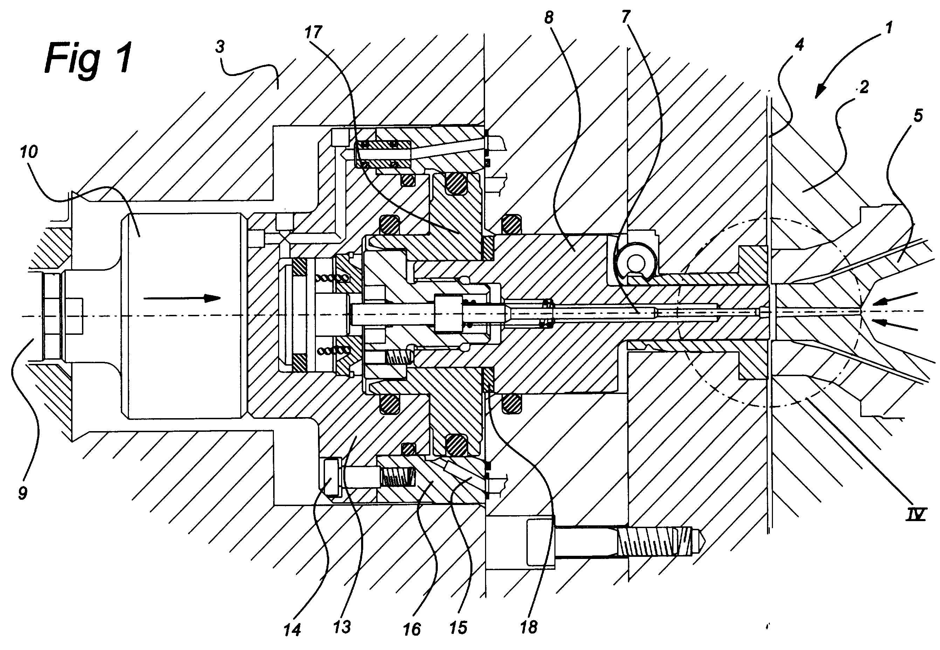

In Fig. 1 a mould assembly is denoted in its entirety by 1. It should be understood that details of the mould assembly which are not essential to the invention are not shown. As is evident from the figure, each of the mould parts 2 and 3 is constructed from a number of separate parts which are not further named and are of no importance for gaining an understanding of the invention.

Between the mould parts 2 and 3 a cavity 4 is delimited, for example for the injection-moulding of a visual information carrier. An injection nozzle, which is here fixed but may be fitted displaceably relative to the mould part 2, is denoted by 5. In the opposite mould part 3 a punch mechanism is fitted lying opposite the injection nozzle 5, which punch mechanism is denoted in its entirety by 8. In the interior thereof there is an ejector pin 7, which is of no further interest. The punch mechanism 8 is fixedly connected to a piston 17, which can be moved to and fro inside a cap 13. The position of the cap 13 relative to the mould part 3 is determined by a spacer 16. The spacer 16, which is of annular design, comprises a number of air ducts 15. The spacer 16 determines the stroke length of the punch mechanism 8, while the cap 13 defines the starting position thereof. Some displaceability of the cap 13 is possible through the presence of a stop screw 14, the head of which allows some play so that the cap 13 can move to and fro. Within the mould part 3 there is also a push button 10 present, which is operated by a piston rod 9.

As can be seen from the detailed drawing, the free end of the punch mechanism 8 is provided with a tapered part 11.

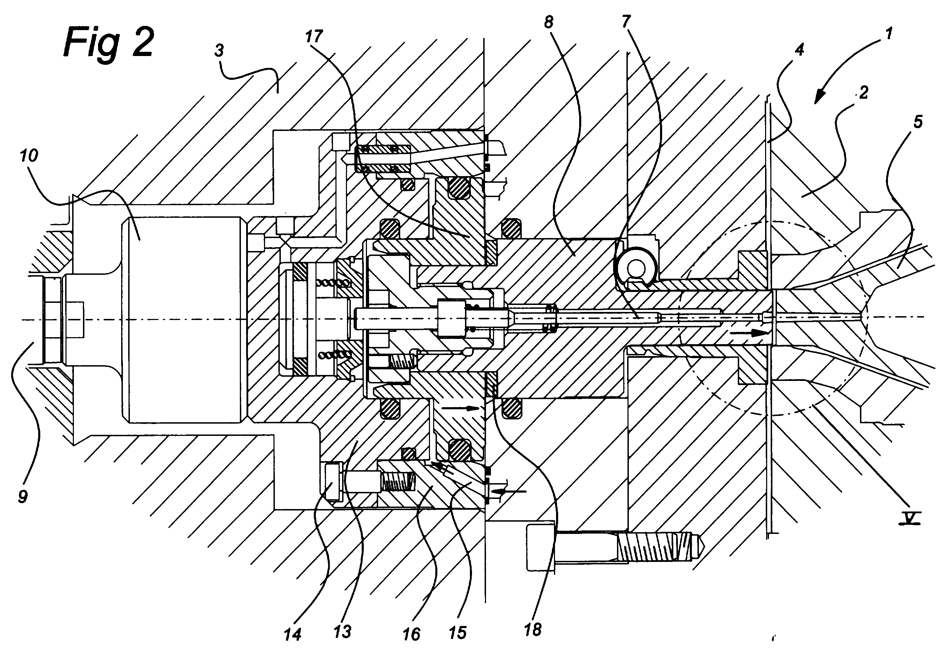

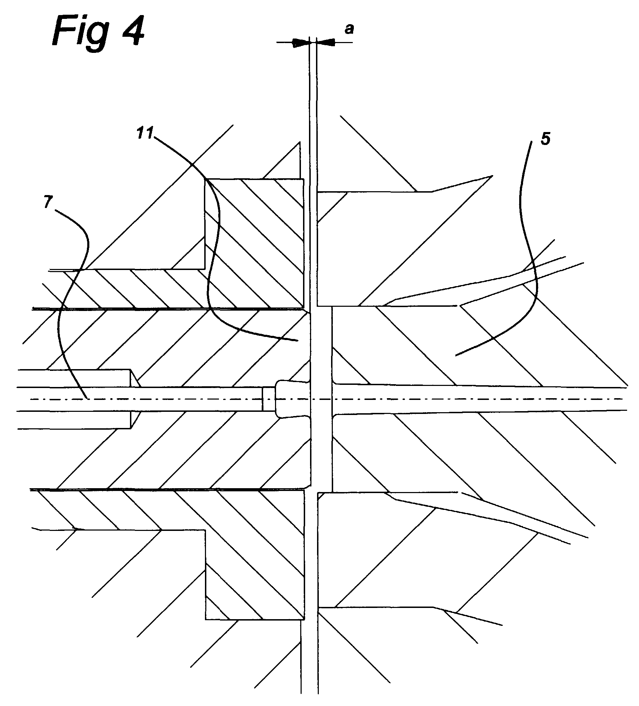

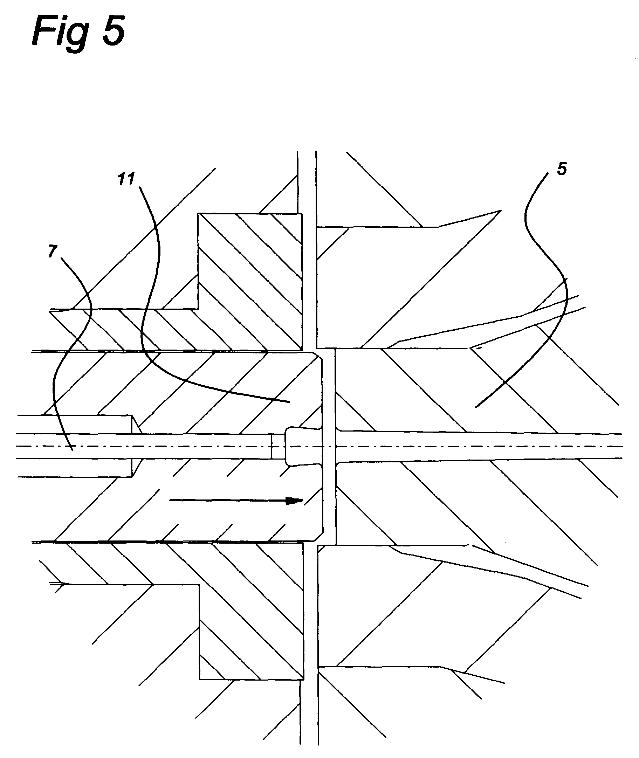

In Figs. 1 and 4, the free end 11 is placed in the closed cavity 4 with a clearance a defined by the mutually opposing mould halves. At this moment, injection-moulding can take place. The space between the free end 11 and the head of the injection nozzle 5 may delimit the restrictor opening which influences the metering of the plastics material. In addition, in a manner which is not portrayed in greater detail, a so-called stamp can be present in the cavity 4. The position represented in Fig. 4 is the position which is usual in the prior art. After the moulding, the punch mechanism, as shown in Figs. 2 and 5, is moved further into the cavity, whilst the plastics material is in the plastic phase above the glass transition temperature, though no plastics material flow is generated. The object is consequently completely bored through and the desired opening is formed. Via duct 15, air is supplied for the movement of the punch mechanism within the cavity. If the injection nozzle is of movable design, movement of the punch mechanism takes place later after the plastics material has at least partially cured.

Under normal operating conditions, the punch mechanism 8 is then moved back, as the mould parts 2 and 3 open up, to the extent that the position shown in Fig. 4 is reached In this position, a part of the object which has just been moulded is supported by the punch mechanism.

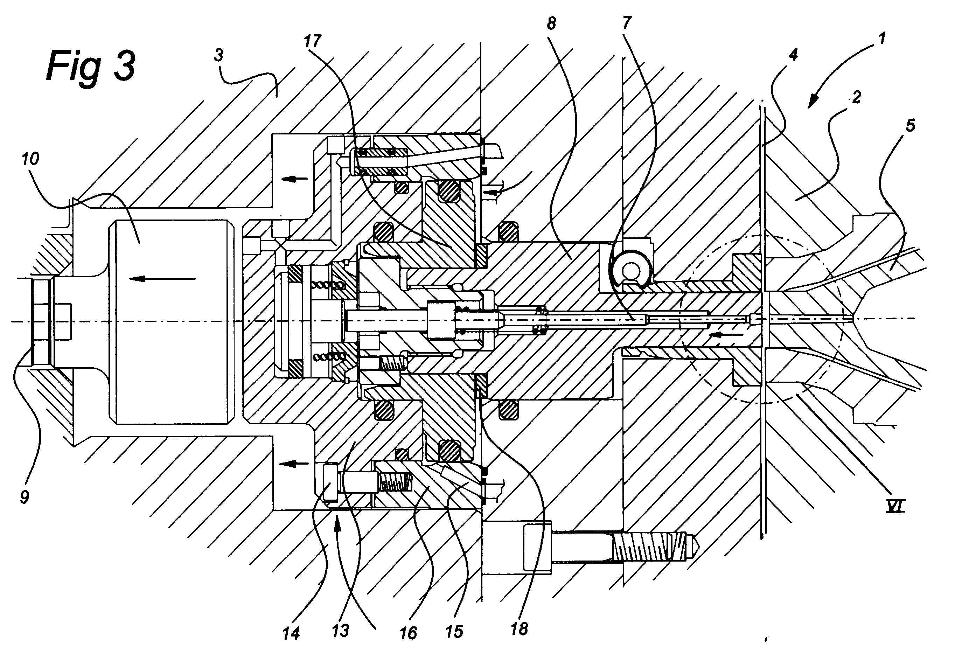

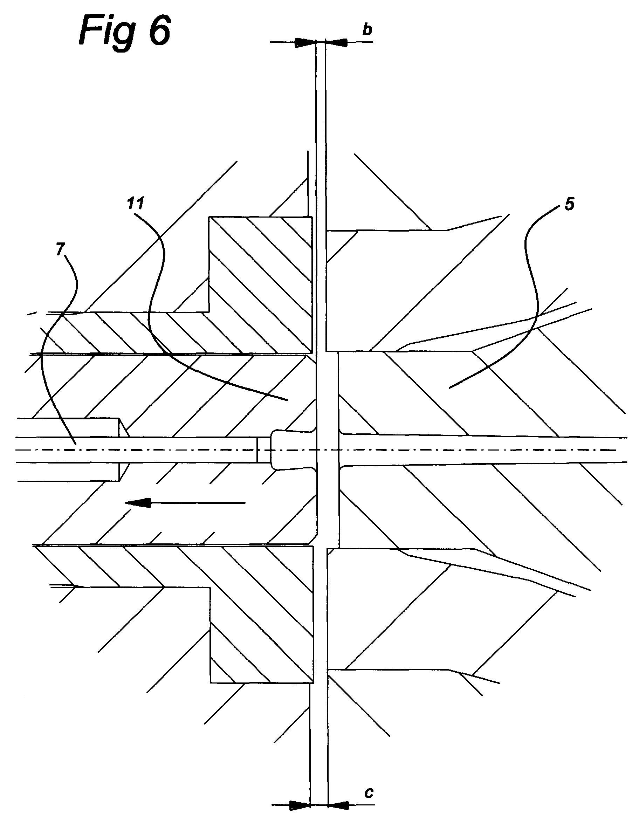

As the injection-moulding process gets underway however, it has been found, however, that, probably as a result of the lower temperature of the tapered part 11, the object which has just been moulded shrinks on the punch mechanism such that simple removal is not possible. In such a case, it is proposed according to the invention to withdraw the punch mechanism further. This situation is represented in Figs. 3 and 6, the distance by which the punch mechanism protrudes into the cavity now being denoted by b. The distance between mould parts 2 and 3 is denoted by c. On the one hand, satisfactory clamping of the object which has just been moulded is ensured and, on the other hand, it is possible with existing methods easily to remove the object which has just been moulded after the mould parts have opened up. The difference between a and b can effectively amount 0,2 - 1,0 millimetre.

The position as shown in Figs. 1 and 4, i.e. the customary operating position, is achieved by the fact that the piston rod 9 is continuously under pressure, with the result that the push member 10 drives the cap 13 constantly against the spacer ring 16. The motional stroke of the piston 17 is thereby limited.

The position obtained in Figs. 3 and 6 is achieved as a result of the piston rod 9 being made pressureless, enabling the cap 13 to move further to the left in the figures. This movement is limited by the head of stop screws 14. This gives rise to greater freedom of movement for the piston 17 and hence for the punch mechanism 8. That is to say, on the one hand it is ensured that the object which has just been moulded is still fully punched through, while on the other hand the tapered end part 11 can be retracted 0.5. mm further, for example, relative to the cavity 4.

It will be understood that it is possible to achieve the further withdrawal of the punch mechanism in a variety of other ways known in the prior art.

Self-evidently, a control assembly is present to control the course of the different movements. The position of push member 10 is preferably referred to mould part 3. It is clear that it is easily possible to increase or reduce the punch stroke during the process from outside.

As indicated above, subject invention can be realised with different modes of injection moulding such as the so-called venting technique and injection/compression technique. For example, it is possible that at the start of injection the mould parts are not in the nearest opposite position. Only after or during injection the final cavity volume is determined.

Although the invention has been described above with reference to a preferred embodiment, it will be understood that numerous changes can be made thereto without departing from the scope of the present application as described in the claims.

## Claims

1. Injection mould assembly (1) comprising at least two mould parts (2, 3), wherein one of said mould parts is provided with a punch mechanism (8) which is movable relative to said mould part (3) from a first position extending partially into the cavity (4) delimited between the mould parts and a second position fully penetrating through the plastics object which has been injected into the cavity, characterized in that means (10, 13) which can be switched off during operation are present, which means provide for a further movement of the punch mechanism into a third position in which this protrudes less far into the cavity than in the said first position.

2. Injection mould assembly according to Claim 1, in which these means comprise a fluid-displaceable stop (13).

3. Injection mould assembly according to one of the preceding claims, in which a cap which is displaceable in that mould part is fitted, the movement of which cap can be switched off and within which cap that end part of the punch mechanism which is situated away from the cavity is displaceably fitted.

4. Injection mould assembly according to one of the preceding claims, comprising means (16, 13) for determining the position of the punch mechanism in the cavity (4).

5. Injection mould assembly according to Claim 4, in which these means comprise spacer means (16), which determine the position of that cap relative to that mould part and hence determine the stroke length of the punch mechanism (8).

6. Injection mould assembly according to one of the preceding claims, in which the punch mechanism is tapered (11) towards the free punching end.

7. Method for the injection moulding of an object, comprising the injection of a plastic material into a cavity delimited by at least two mould halves, the introduction of a punch mechanism into this cavity in order to make an opening in the moulded object, the at least partial withdrawal of that punch mechanism from this cavity while securing that object, and the removal of that object after the opening of the aforementioned mould halves, characterised in that that punch mechanism, under certain operating conditions, is selectively withdrawn further to a position in which the object is still secured by that punch mechanism.

8. Method according to Claim 7, wherein injection moulding comprises injecting of plastic material, wherein the volume of the cavity is substantially constant.

9. Method according to Claim 7, wherein injection moulding comprises injecting of plastic material, wherein during injection and/or after injection the volume of the cavity decreases.

10. Method according to Claims 7-9 in which these operating conditions comprise the start-up of the injection-moulding.
